# EUROPÄISCHE PATENTSCHRIFT

(11) **EP 2 294 532 B1**
(45) Veröffentlichungstag und Bekanntmachung des Hinweises auf die Patenterteilung: **09.05.2012**
(21) Anmeldenummer: 09757499.0
(22) Anmeldetag: 02.06.2009
(51) Int. Cl.: G06K 13/00, G06K 13/07, G06K 13/08, G06K 19/00, G07F 7/10

(54) **KODIERVORRICHTUNG FÜR DATENTRÄGER UND VERFAHREN ZUM KODIEREN VON DATENTRÄGERN**
ENCODING DEVICE FOR DATA STORAGE MEDIA AND METHOD FOR ENCODING DATA STORAGE MEDIA
DISPOSITIF DE CODAGE POUR SUPPORTS DE DONNÉES ET PROCÉDÉ DE CODAGE DE SUPPORTS DE DONNÉES

(30) Priorität: 03.06.2008 DE 102008026464; 14.10.2008 DE 102008051516
(43) Veröffentlichungstag der Anmeldung: 16.03.2011
(73) Patentinhaber: Mühlbauer AG, 93426 Roding (DE)
(72) Erfinder: DIMPFL, Martin, 93462 Lam (DE); VALTA, Thomas, 93489 Schorndorf (DE); STEIF, Richard, 93489 Schorndorf-Obertraubenbach (DE)
(74) Vertreter: Schmidt, Steffen J.
(86) Internationale Anmeldenummer: PCT/EP2009/056704
(87) Internationale Veröffentlichungsnummer: WO 2009/147118

(56) Entgegenhaltungen:
- DE-A1- 19 634 230
- DE-A1- 19 641 892
- DE-A1- 19 644 306
- DE-A1- 19 840 811
- US-A- 4 827 425
- US-A- 4 866 259
- US-A- 5 943 238
- US-A1- 2002 081 180
- US-A1- 2004 011 865
- US-B1- 6 283 368

## Beschreibung

Die Erfindung betrifft eine Codiervorrichtung für Datenträger, insbesondere Chipkarten, mit einer Transporteinrichtung zum Transport einer Mehrzahl an Datenträgern in eine erste Transportrichtung einer Transportebene und einer Dreheinrichtung mit einer Mehrzahl an ringartig angeordneten Codierstationen, die jeweils ein Aufnahmefach zum Aufnehmen jeweils eines Datenträgers aufweisen, gemäß dem Oberbegriff des Patentanspruches 8 sowie ein Verfahren zum Codieren von Datenträgern gemäß dem Oberbegriff des Patentanspruches 1.

Aus DE 697 26 781 T2 und DE 698 20 613 T2 (veröffentlicht als US 5,943,238 und US 6,283,38) sind Personalisierungsvorrichtungen bekannt, die Chipkarten aus einer Stapeleinheit entnehmen, entlang einer Transportrichtung transportieren und anschließend diese in ringförmig angeordneten Kontaktierungsvorrichtungen aufnehmen. Die Kontaktierungsvorrichtungen sind innerhalb eines vertikal ausgerichteten Rades randseitig ringförmig angeordnet, wobei eine Drehachse dieses Rades parallel zu einer Transportebene des vorausgegangen Transportes ausgerichtet ist.

Das Rad dreht sich fortlaufend in eine vorgegeben Drehrichtung, wobei diese Drehrichtung immer beibehalten wird. Für eine derartige fortlaufende Drehung in eine vorgegebene Richtung muss das Rad Schleifkontakte und Schleifringe aufweisen, um eine Stromzu- und Abführung sowie einen Datentransfer zu dem Rad und zu den einzelnen Kontaktierungsvorrichtungen, innerhalb welcher ein Datentransfer von oder zu der eingefügten Chipkarte erfolgt, verwendet werden, da ansonsten ein sich ständig fortsetzendes Verdrehen und Aufwickeln der hierfür notwendigen Drahtverbindungen erfolgen würde. Wenn keine Schleifkontakte oder Schleifringe hierzu verwendet werden, würde dies letztendlich zu einem Bruch der eingebauten Drähte und somit zu einer Strom- und Datentransferunterbrechung führen. Zudem sind derartige Schleifringe mit höheren Herstellungskosten, höheren Wartungskosten und höheren Reparaturkosten verbunden.

Zudem führen derartig ausgerichtete Drehplatten bzw. Drehräder, an deren Außenrand die Kontaktierungsvorrichtungen angeordnet sind und die vertikal zu der Transportrichtung des zuvor erfolgten Transportes ausgerichtet sind dazu, dass die Karten, wenn sie auf der einen Seite der vertikal ausgerichteten Drehplatte bzw. Drehscheibe aufgenommen werden und auf der anderen Seite abgelegt werden, in umgedrehter Ausrichtung abgelegt werden, also wird die zuvor nach unten gerichtete Rückseite nach oben gewandt. Oft ist ein derartiges Umdrehen der Karten für die nachfolgende Bearbeitung nicht erwünscht.

US 4,827,425 beschreibt ein System zur Personalisierung von Chipkarten. Dabei erfolgt die Personalisierung an einer Mehrzahl nacheinander angeordneter Codierstationen. Die Mehrzahl der Codierstationen ist dabei entweder auf einem horizontalen oder einem vertikalen Drehtisch angeordnet. Der Drehtisch wird in nur eine Richtung gedreht und die Datenübertragung zu den Codierstationen erfolgt über eine optische Verbindung.

DE 196 44 306, gegen die die unabhängigen Ansprüche abgegrenzt sind, beschreibt eine Vorrichtung zum Personalisieren von Identifikationskarten. Die Vorrichtung umfasst eine Druckstation und eine Wendestation. Dabei weist die Wendestation einen Rotor mit mehreren Walzenpaaren auf. Die Walzenpaare werden durch einen Motor angetrieben und sind zum Transport der Karte vorgesehen. Zudem weist der Rotor Kontaktiereinrichtungen zum Laden der Chips der Karten auf. Gemäß eines Ausführungsbeispiels wird eine einseitig bedruckte erste Karte in eine erste Richtung über einen zweiten Abschnitt zu einem ersten Abschnitt transportiert. In dem ersten Abschnitt wird der Chip der ersten Karte geladen. Eine zweiseitig bedruckte, bereits teilweise geladene zweite Karte wird in die gleiche Richtung zu dem zweiten Abschnitt transportiert. Anschließend wird der Rotor um 180° gedreht, wobei der Chip der ersten Karte teilgeladen und der Chip der zweiten Karte vollständig geladen wird. Danach wird die zweite Karte in der ersten Richtung aus der Wendestation transportiert und die erste Karte in die der ersten Richtung entgegengesetzte Richtung zurück zur Druckstation transportiert. Nachdem die erste und zweite Karte aus der Wendestation transportiert wurden, kann die Wendeeinrichtung sofort erneut mit Karten beladen werden. Der Rotor kann dabei in zwei Richtungen um 180° gedreht werden. Die elektrische Versorgung der elektrischen Einrichtungen am Rotor erfolgt durch ein Bündel von Kabeln, welches sich mit dem Rotor mitdreht.

DE 196 41 892 A1 beschreibt eine Vorrichtung sowie ein Verfahren zum Programmieren von Mikroprozessorkarten. Die Vorrichtung umfasst einen Transportteller und einen Programmierteller. Zudem ist ein Eingabemagazin, ein Ausgabenmagazin, ein kleiner Transportteller, eine Magnetisierungsvorrichtung und eine Laservorrichtung vorgesehen. Greifeinrichtungen bewegen die Karten zwischen den unterschiedlichen Stationen. Die Programmierung erfolgt auf dem Programmierteller. Dabei werden mehrere Karten gleichzeitig programmiert, während der Programmierung bewegen sich die Karten in einer geschlossenen Kreisbahn. Ferner weist der Programmierteller mehrere Prozessrechner auf, die über Schleifkontakte oder eine berührungslose Datenübertragung mit einem Steuerrechner verbunden sind. Der Programmierteller wird somit in nur eine Richtung bewegt.

Demzufolge liegt der vorliegenden Erfindung die Aufgabe zugrunde, eine Codiervorrichtung für Datenträger zum Codieren von Datenträgern zur Verfügung zu stellen, die einen einfachen Aufbau ohne Schleifkontakte für die Strom- und Datenzufuhr zu Codierstationen aufweist, und die Lage und Ausrichtung der Datenträger während der Codierung beibehält. Des weiteren liegt der vorliegenden Erfindung die Aufgabe zugrunde, ein Verfahren zum Codieren von Datenträgern zur Verfügung zu stellen welches eine vereinfachte Übertragung von Daten zu den einzelnen zu codierenden Datenträgern durch die Beibehaltung der Datenträgerausrichtung hinsichtlich ihrer Ober- und Unterseiten vor und nach dem Codiervorgang und einen einfachen Aufbau einer Codiervorrichtung ermöglicht.

Diese Aufgabe wird verfahrensseitig durch die Merkmale des Patentanspruches 1 und vorrichtungsseitig durch die Merkmale des Patentanspruches 8 gelöst.

Ein wesentlicher Punkt der Erfindung liegt darin, dass bei einer Codiervorrichtung die Datenträger, insbesondere Chipkarten, mit einer Transporteinrichtung zum Transport einer Mehrzahl an Datenträgern in eine erste Transportrichtung einer Transportebene und einer Dreheinrichtung mit einer Mehrzahl an ringartig angeordneten Codierstationen, die jeweils ein Aufnahmefach zum Aufnehmen jeweils eines Datenträgers aufweisen, eine Drehachse der Dreheinrichtung senkrecht zu der Transportebene und der ersten Transportrichtung ausgerichtet aufweisen. Die Dreheinrichtung ist um die Drehachse in eine zweite Transporteinrichtung und eine der zweiten Transportrichtung entgegengesetzten dritten Transportrichtung drehbar gelagert, so dass sowohl eine vorwärtsgerichtete Drehbewegung als auch eine rückwärtsgerichtete Drehbewegung der Dreheinrichtung möglich ist. Sofern dies mit einer gegenüber der Dreheinrichtung stationär angeordneten Be- und Entladestation zum Be- und Entladen der Datenträger von der Transporteinrichtung in die Codierstationen und von den Codierstationen auf die Transporteinrichtung und/oder eine weitere Transporteinrichtung kombiniert wird, entsteht hierdurch die Möglichkeit, dass an der vorzugsweise einzigen Be- und Entladestation die Codierstationen einzeln sowohl in vorwärts- als auch in rückwärtsgerichteter Drehbewegung Be- und/oder Entladen werden können, wobei eine vollständige 360°-Drehung vermieden wird. Dies hat zur Folge, dass nicht mehr weiterhin Schleifkontakte und Schleifringe verwendet werden müssen, um einen Strom- und Datentransfer zu den einzelnen Codierstationen sicher zu stellen, wie es der Fall wäre, wenn sich die Dreheinrichtung fortlaufend immer in eine Richtung weiterdrehen würde. Vielmehr kann durch die vorwärts- und rückwärtsgerichtete Drehbewegung erreicht werden, dass eine direkte Drahtverbindung zu den einzelnen Codierstationen besteht, die sich immer wieder auf- und abwickeln, sofern einer vorwärtsgerichteten zweiten Transportrichtung bzw. Drehrichtung eine dritte rückwärtsgerichtete Transportrichtung bzw. Drehrichtung erfolgt.

Durch die Ausbildung einer stationär angeordneten Be- und Entladestation, welche sich nicht mit der Dreheinrichtung mitdreht erübrigt sich eine Mehrzahl an entsprechend ausgebildeten Be- und Entladeeinrichtungen bzw. -elementen, die jeder einzelnen Codierstation zugeordnet wären und sich mit der Dreheinrichtung mitdrehen würden. Vielmehr kann auf diese Mehrzahl an sich mitdrehenden Be- und Entladeeinrichtungen bzw. -elementen verzichtet werden. Hieraus ergibt sich eine Kostenreduzierung während der Herstellung einer derartigen Vorrichtung und eine diesbezügliche Materialeinsparung bei der Herstellung.

Die Ausbildung der Dreheinrichtung mit einer Drehachse, deren Ausrichtung senkrecht zu der Transportebene und der ersten Transportrichtung des zuvor erfolgten, vorzugsweise in einer Ebene des Transportes hat neben dem Effekt, dass die Datenträger, insbesondere Chipkarten, mit der gewünschten Oberfläche wieder abgelegt werden, die Wirkung, dass eine platzsparende Anordnung der Codiervorrichtung innerhalb einer größeren Anlage, die vorzugsweise eine Personalisierungsmaschine darstellt, möglich ist. Denn bedingt durch die horizontale Ausrichtung der Dreheinrichtung, die auch als Drehteller bezeichnet werden kann, wird eine Gesamtanlage mit einer geringen Bauhöhe ermöglicht, da ein derartiger Drehteller nicht in vertikaler Ausrichtung "riesenradartig" innerhalb der Anlage angeordnet ist.

Die Be- und Entladestation ist vorzugsweise mit mindestens mit einem in Richtung der Drehachse ein- und ausfahrbaren Antriebselement, vorzugsweise ein Zylinderelement, Motor o.a., zum Ein- und Ausfahren von jeweils einem Aufnahmefach versehen. Hierbei kann das Antriebselement mit mindestens einem an jedem Aufnahmefach angebrachten stangenartigen Führungselement wechselwirken, wobei das stangenartige Führungselement mit dem ein- und ausfahrbaren Aufnahmefach verschiebbar ist. Sofern das Aufnahmefach also unterhalb zwei sich vertikal erstreckender stangenartiger Führungselemente angeordnet ist und an diesen befestigt ist, können diese stangenartige Führungselemente mittels des von oben wirkenden Antriebselementes nach unten gedrückt werden, wobei in dieser Stellung des Aufnahmefaches eine Be- oder Entladung des Aufnahmefaches mit einer Chipkarte erfolgt, und anschließend wieder nach oben gefahren werden.

Vorzugsweise findet ein derartiges nach oben Fahren der stangenartigen Führungselemente und damit auch des Aufnahmefaches dadurch statt, dass die stangenartigen Federelemente und/oder das Aufnahmefach federbeaufschlagt sind/ist, um hierdurch das Aufnahmefach selbsttätig bei eingefahrenen Antriebselement einfahren zu lassen.

Gemäß einem Verfahren der vorliegenden Erfindung, in dem mit einer Transporteinrichtung eine Mehrzahl an Chipkarten in einer ersten Transportrichtung einer Transportebene transportiert werden, und eine Dreheinrichtung in eine zweite Transportrichtung und eine der zweiten Transportrichtung entgegengesetzten dritten Transportrichtung gedreht wird, wird die Dreheinrichtung sowohl in die zweite als auch in die dritte Transportrichtung um weniger als 360° gedreht. Die Dreheinrichtung wird dabei um eine senkrecht zu der Transportebene und der ersten Transportrichtung ausgerichtete Drehachse gedreht, wobei eine Mehrzahl an der Dreheinrichtung ringartig angeordneter und an der Dreheinrichtung befestigter Codierstationen, die jeweils ein Aufnahmefach aufweisen, jeweils mit einer Chipkarte beladen werden. Ein erster Teil der Codierstationen wird taktweise, in einer bestimmten Reihenfolge der Codierstationen, beladen, und die Dreheinrichtung wird zwischen den einzelnen Beladevorgängen des ersten Teils der Codierstationen in die zweite Transportrichtung gedreht. Ein zweiter Teil der Codierstationen wird taktweise, in einer bestimmten Reihenfolge der Codierstationen, beladen, die Dreheinrichtung zwischen den einzelnen Beladevorgängen des zweiten Teils der Codierstationen wird in die dritte Transportrichtung gedreht, und die Chipkarten in den Codierstationen werden codiert.

In einem Verfahren kann die Dreheinrichtung taktweise in die zweite Transportrichtung derart gedreht werden, dass sie mit jedem n-ten Aufnahmefach zur Aufnahme erster Datenträger an der Be- und Entladestation anhält und in die dritte Transportrichtung derart drehbar ist, dass sie mit jedem (n+1)-ten Aufnahmefach zur Aufnahme zweiter Datenträger an der Be- und Entladestation anhält. Hierbei enthält n die ungeraden Zahlennummem, die bei einer ringförmigen Durchnummerierung der Aufnahmefächer, die ringartig an der Dreheinrichtung bzw. dem Drehteller angeordnet sind, entstehen. Dies bedeutet, dass zum Beispiel nur jedes zweite Aufnahmefach bei einer Drehung der Dreheinrichtung in die zweite Transportrichtung mit einer Chipkarte beladen wird, wohingegen die dazwischenliegenden Aufnahmefächer vorerst unbesetzt bleiben. Eine derartige Beladung findet so lange statt, bis die Dreheinrichtung eine nahezu 360°-Drehung durchgeführt hat, wobei hierbei 360° nicht überschritten werden. Anschließend findet die entgegengesetzte Drehung in die dritte Transportrichtung statt, um während dieser Drehung jedes zwischen den bereits besetzten Aufnahmefächern liegende Aufnahmefach mit einer weiteren Chipkarte zu beladen. Erst wenn dieser Beladungsvorgang vollständig abgeschlossen ist, und eine Codierung der einzelnen Chipkarten, welche während des Beladevorgangs bereits starten kann, beendet ist, findet eine Entladung der Aufnahmefächer an der gleichen Be- und Entladestation oder gegebenenfalls an einer weiteren Be- und Entladestation statt. Alternativ können die ersten Datenträger, nachdem diese zuvor in den Codierstationen bzw. den dazugehörigen Aufnahmefächern eingeführt wurden bzw. die Dreheinrichtung mit diesen beladen wurden, und eine Codierung bereits erfolgt ist, diese wieder entladen werden, während die zweiten Datenträger in den dazwischenliegenden besetzten Aufnahmefächern bzw. Codierstationen hineingeschoben werden. Somit würde in diesem Fall ein zeitgleicher Be- und Entladevorgang stattfinden, wobei wiederum vorzugsweise lediglich jedes zweite Aufnahmefach bei einer Drehbewegung der Dreheinrichtung in die zweite Transportrichtung und die dazwischenliegenden noch freien Aufnahmefächer bei einer Drehbewegung in die entgegengesetzte dritte Transportrichtung belegt werden.

Vorteilhaft kann die Reheinfolge der geladenen Karten während und nach dem Codiervorgang aufrechterhalten bleiben. Selbst wenn eine schlechte Karte vor oder während des Codiervorgangs identifiziert werden würde, kann die Reihenfolge aufrechterhalten bleiben. Somit befinden sich die Karten in einem sortierten Zustand.

Selbstverständlich ist auch denkbar, dass die Aufnahmefächer in einer anderen Reihenfolge be- und entladen werden, wie beispielsweise das Beladen sämtlicher Aufnahmefächer über eine erste 180°-Drehung und das Beladen sämtlicher Aufnahmefächer innerhalb einer zweiten darauf folgenden 180°-Drehung der Dreheinrichtung, wobei die Dreheinrichtung sich in die zweite Transportrichtung über die ersten 180° und die zweiten 180° dreht. Anschließend würde bei einer rückwärtsgerichteten Drehbewegung bzw. während der dritten Transportrichtung der Dreheinrichtung eine komplette Entladung der Aufnahmefächer stattfinden. Somit würde bei einer vorwärtsgerichteten Drehbewegung über nahezu 360° eine Beladung sämtlicher Aufnahmefächer und bei einer rückwärtsgerichteten Drehbewegung über nahezu 360° eine Entladung der Aufnahmefächer erfolgen. Vorzugsweise ist die Dreheinrichtung sowohl in die zweite als auch in die dritte Transportrichtung um weniger als 360° drehbar, um die Anbringung von den Schleifringen und Schleifkontakten zu vermeiden.

Weitere vorteilhafte Ausführungsformen ergeben sich aus den Unteransprüchen.

Vorteile und Zweckmäßigkeiten sind der nachfolgenden Beschreibung in Verbindung mit der Zeichnung zu entnehmen. Hierbei zeigen:
- Fig. 1: In einer schematischen perspektivischen Darstellung eine Codiervorrichtung gemäß einer Ausführungsform der Erfindung;
- Fig. 2: in einer schematischen Ausschnittsdarstellung die Codiervorrichtung gemäß der Ausführungsform der Erfindung; und
- Fig. 3: eine perspektivische Darstellung der Codiervorrichtung gemäß der Ausführungsform der Erfindung in einem hochgeklappten Zustand.

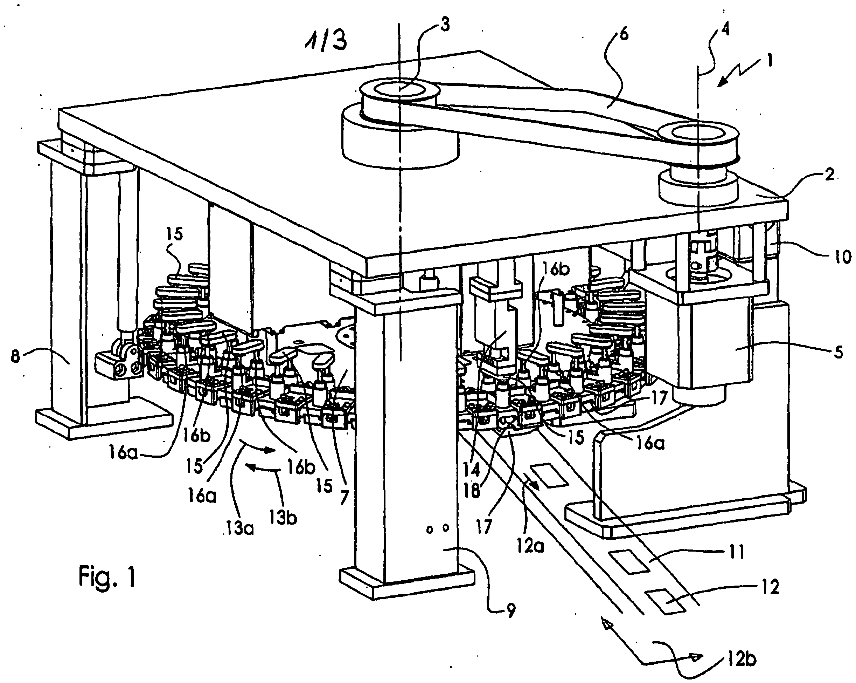

In Fig. 1 wird in einer schematischen Darstellung die Codiervorrichtung gemäß einer Ausführungsform der Erfindung gezeigt. Diese besteht aus einer Dreheinrichtung 1 mit einer oberen stationär angeordneten Platte 2, in welcher eine Drehachse 3 angeordnet ist, an welche ein Drehteller 7 befestigt ist, welcher sich um die Drehachse 3 drehen kann.

Ein Antrieb der Drehachse 3 und damit des Drehtellers 7, vorzugsweise taktweise, erfolgt mittels eines Motors 5, der über einen Keilriemen 6 mit der Drehachse 3 verbunden ist.

Sowohl die obere Platte 2 als auch der Drehteller 7 und die weiteren Einrichtungen sind auf Standbeinen 8, 9 und 10 und gegebenenfalls weiteren Standbeinen angeordnet.

Eine Transporteinrichtung 11 sorgt für den Transport von Chipkarten 12 in Transportrichtung 12a innerhalb einer Transportebene 12b. Dieser Transport der Chipkarten 12 folgt zu einer Be- und Entladestation 14, die Aufnahmefächer 17 mittels stangenartiger Führungselemente 16a und 16b bzw. entsprechend ausgebildeter Stifte und darüber angeordneter Stempelflächen durch ein Antriebselement von oben nach unten gedrückt werden können. Sobald die Aufnahmefächer nach unten gedrückt sind, erfolgt die Zuführung bzw. Beladung mit einer Chipkarte 12. Anschließend wird das Antriebselement, welches zu der Be- und Entladestation 14 gehört nach oben gefahren. Durch eine entsprechende Federbeaufschlagung der Aufnahmefächer oder der stangenartigen Führungselement 16a und 16b wird hierdurch ein selbstständiges nach oben Fahren der Aufnahmefächer 17 erfolgen und somit ein Anordnen der Chipkarten innerhalb der eigentlichen Codierstation zur nachfolgenden Codierung der Chipkarten.

Der Drehteller 7 kann sowohl in eine vorwärtsgerichtete Drehbewegung 13a als auch in eine rückwärtsgerichtete Drehbewegung 13b gedreht werden.

Der beispielsweise vertikal ausgerichtete Zylinder 14 der Be- und Entladestation ist an der Unterseite der oberen Platte 2 direkt oder indirekt angebracht und somit gegenüber dem sich drehenden Drehteller stationär angeordnet.

Durch das nach oben Fahren des Aufnahmefaches findet eine Positionierung der Chipkarte in ihrer für die nachfolgende Codierung richtigen passenden Lage statt. Jede Codierstation mit einer Codiereinheit 18 weist Kontaktstifte, die hier nicht näher dargestellt sind, auf, um für eine sich anschließende Codierung mit der Chipkarte elektrisch in Kontakt zu treten und so gegebenenfalls ein Datentransfer durchzuführen. Selbstverständlich kann die eigentliche Codierung auch durch eine kontaktlose Datenübertragung, beispielsweise mittels Induktion erfolgen.

Die Codierung an sich wird mittels nicht näher dargestellter Codierelektronikelemente, vorzugsweise in Form von Codierplatinen, innerhalb einer jeden Codierstation durchgeführt und dreht sich mit dem Drehteller 7 mit.

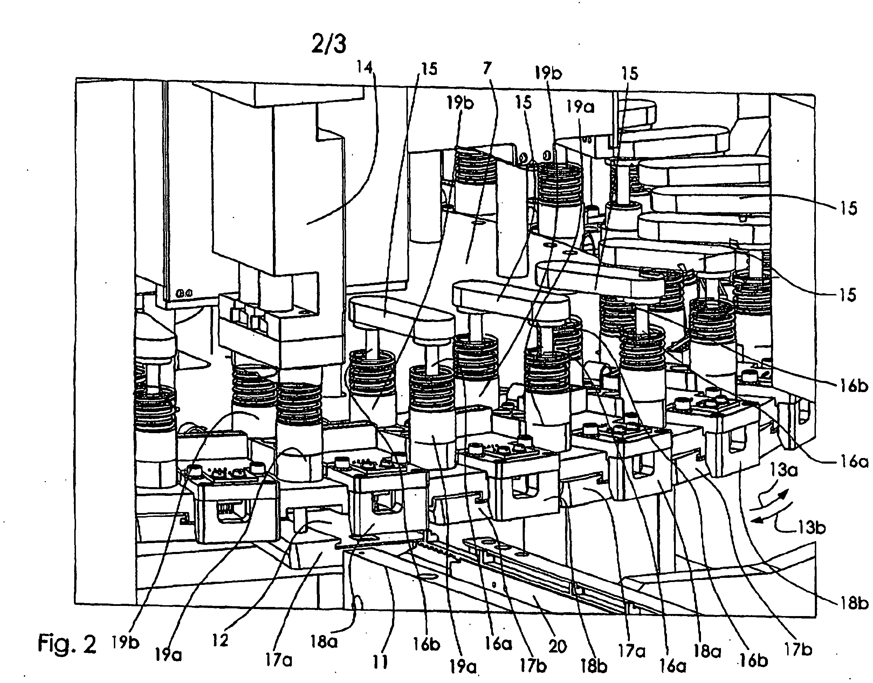

Aus Fig. 2, die eine ausschnittsweise perspektivischen Darstellung der Codiervorrichtung gemäß der Ausführungsform der Erfindung zeigt, geht hervor, dass innerhalb zylinderartiger Bauelemente 19a und 19b die Anordnung von Federelementen, vorzugsweise Spiralfedern möglich ist, welche auf die stangenartigen Führungselemente 16a, 16b bzw. die Stifte derart wirken, dass diese, sobald sie keine Druckbeaufschlagung von Seiten des Antriebselementes 14 von oben mehr erfahren, automatisiert durch Entspannung der Federn nach oben Fahren und hierdurch ein selbstständiges nach oben Verschieben des Aufnahmefaches 17 bzw. 17a, 17b erfolgt. Hierdurch wird die Chipkarte gegenüber der nicht näher dargestellten Codiereinheit 18a, 18b in Position gebracht, um anschließend eine Codierung zu erhalten.

Sobald ein erstes Aufnahmefach 17a mit der Chipkarte 12 belegt ist, erfolgt nach entsprechenden nach oben Fahren des Antriebselementes 14 ein taktweises Weiterbewegen des Drehtellers 7 in eine Drehbewegungsrichtung 13b, wobei absichtlich das nachfolgende Aufnahmefach 17b nicht belegt wird, sondern erst wieder das darauf folgenden Aufnahmefach 17a. Somit findet eine Beladung jedes zweiten Aufnahmefaches 17a bei einer Drehbewegung in Richtung 13b statt. Dies bedeutet, dass das erste, dritte, fünfte, siebte usw. Fach jeweils mit einer Chipkarte belegt wird. Dies wird während einer Drehbewegung in Richtung 13b so lange durchgeführt, bis eine nahezu 360°-Drehung des Drehtellers 7 erfolgt ist. Selbstverständlich kann auch jedes dritte oder nur jedes vierte Aufnahmefach oder auch jedes Aufnahmefach während einer derartigen Drehbewegung in eine Richtung beladen werden.

Nach einer nahezu vollständigen 360°-Drehung, die dann erfolgt ist, wenn das letzte Aufnahmefach vor Erreichen einer vollständigen 360°-Drehung im vorher beschriebenen Rhythmus unter Auslassung von jeweils dem zweiten Aufnahmefach beladen worden ist, findet eine Umkehrung der Drehbewegung in Richtung 13a statt. Bei dieser Drehbewegungsrichtung 13a werden nun die dazwischenliegenden noch unbesetzten Aufnahmefächer 17b mit den dazugehörigen Codierbauteilen 18b mit den Chipkarten wiederum durch taktweises Fortbewegen des Drehtellers 7 beladen. Hierdurch findet eine komplette Beladung bzw. Befüllung des Drehtellers 7 statt. Während und/oder nach einer derartigen Beladung des Drehtellers 7 mit den Chipkarten 12 findet das eigentliche Codierverfahren der Chipkarten statt. Nach Beendigung des Codierverfahrens werden die codierten Chipkarten aus den Aufnahmefächern wieder entladen, wobei dies entweder in umgekehrter Reihenfolge oder auch durch sukzessives Entladen der aufeinander folgenden Aufnahmefächer 17a und 17b erfolgen kann.

Die entnommenen codierten Chipkarten werden dann entweder auf ein weiteres Transportband oder auf die bereits beschriebene Transporteinrichtung 11 abgelegt. Anschließend erfolgt wiederum ein Beladen des Drehtellers 7 mittels der mit der Transporteinrichtung 11 zugeführten Chipkarten 12, wobei die Transporteinrichtung 11 hierfür ein Vorschubelement 20 aufweist, welches die Chipkarten in die Aufnahmefächer 17, 17a und 17b hineinschiebt.

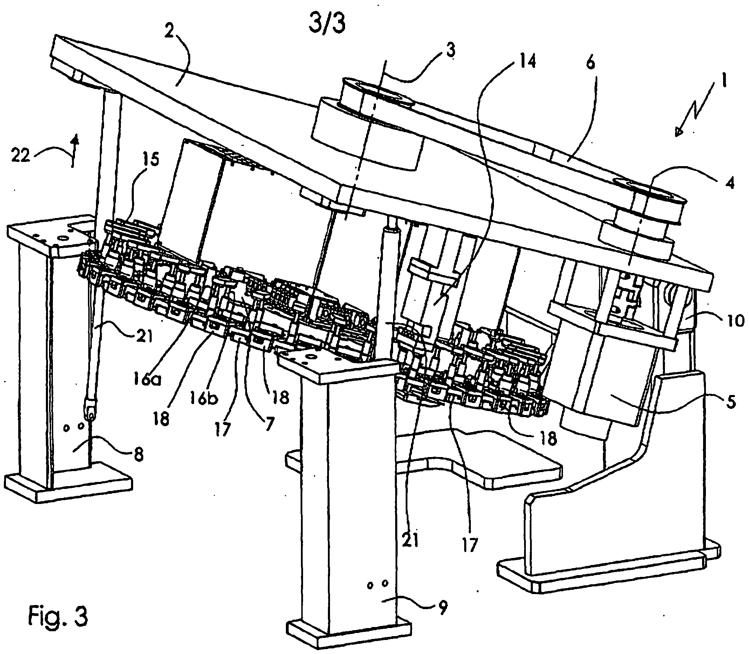

In Fig. 3 wird die Dreheinrichtung 1 gemäß der Ausführungsform in perspektivischer Darstellung und im aufgeklappten Zustand wiedergegeben. Dieser aufgeklappte Zustand dient dazu, besser Wartungsarbeiten oder Servicearbeiten an der Codiervorrichtung durchführen zu können. Hierfür weist die Dreheinrichtung 1 ausfahrbare Teleskopstäbe 21, die mechanisch oder elektrisch betrieben werden können, auf. Bei Ausfahren der sich nach oben erstreckenden Teleskopstöcke in Richtung des Pfeils 22 findet ein nach oben Verschwenken des Drehtellers 7 statt. Hierdurch wird der Zugang zu dem Drehteller und den Aufnahmefächern, insbesondere zu den einzelnen Codierstationen sowohl von oben als auch von unten erleichtert.

### Bezugszeichenliste

- 1: Dreheinrichtung
- 2: Platte
- 3: Drehachse
- 5: Motor
- 6: Keilriemen
- 7: Drehteller
- 8,9,10: Standbeine
- 11: Transporteinrichtung
- 12: Chipkarte
- 12a: Transportrichtung
- 12b: Transportebene
- 13a: vorwärtsgerichtete Drehbewegung
- 13b: rückwärtsgerichtete Drehbewegung
- 14: Be- und Entladestation
- 15: Codierstation
- 16a, 16b: Führungselemente
- 17,17a, 17b: Aufnahmefächer
- 18,18a, 18b: Codiereinrichtungen
- 19a, 19b: Bauelemente
- 20: Vorschubelement
- 21: Teleskopstäbe
- 22: Pfeil

## Patentansprüche

1. Verfahren zum Codieren von Chipkarten, wobei
- mit einer Transporteinrichtung (11) eine Mehrzahl an Chipkarten (12) in einer ersten Transportrichtung (12a) einer Transportebene (12b) transportiert werden,
- eine Dreheinrichtung (1) in eine zweite Transportrichtung (13a) und eine der zweiten Transportrichtung (13a) entgegengesetzten dritten Transportrichtung (13b) gedreht wird, wobei die Dreheinrichtung (1) sowohl in die zweite als auch in die dritte Transportrichtung (13a, 13b) gedreht wird,
**dadurch gekennzeichnet, dass**
- die Dreheinrichtung um eine senkrecht zu der Transportebene (12b) und der ersten Transportrichtung (12a) ausgerichtete Drehachse (3) gedreht wird, wobei
- eine Mehrzahl an der Dreheinrichtung (1) ringartig angeordneter und an der Dreheinrichtung (1) befestigter Codierstationen (18a, 18b), die jeweils ein Aufnahmefach (17a, 17b) aufweisen, jeweils mit einer Chipkarte (12) beladen werden, wobei
-- ein erster Teil der Codierstationen (18a) taktweise, in einer bestimmten Reihenfolge der Codierstationen (18a, 18b), beladen wird,
-- die Dreheinrichtung (1) zwischen den einzelnen Beladevorgängen des ersten Teils der Codierstationen (18a) in die zweite Transportrichtung (13a) gedreht wird,
-- ein zweiter Teil der Codierstationen (18b) taktweise, in einer bestimmten Reihenfolge der Codierstationen (18a, 18b), beladen wird,
-- die Dreheinrichtung (1) zwischen den einzelnen Beladevorgängen des zweiten Teils der Codierstationen (18b) in die dritte Transportrichtung (13b) gedreht wird, und
- die Chipkarten (12) in den Codierstationen (18a, 18b) codiert werden.

2. Verfahren nach Anspruch 1, wobei die Dreheinrichtung (1) abwechselnd in die zweite und dritte Transportrichtung (13a, 13b) gedreht wird.

3. Verfahren nach Anspruch 1, wobei die Codierstationen (18a, 18b) durch eine stationär angeordnete Be- und Entladestation (14) beladen werden.

4. Verfahren nach Anspruch 1, wobei die Chipkarten (12) im ersten Teil der Codierstationen (18a) erst dann entladen werden, nachdem der zweite Teil der Codierstationen (18b) vollständig beladen worden ist und die Chipkarten (12) im zweiten Teil der Codierstationen (18b) erst dann entladen werden, nachdem der erste Teil der Codierstationen (18a) entladen und erneut beladen worden ist.

5. Verfahren nach Anspruch 1, wobei die Chipkarten (12) in der Reihenfolge des Beladens entladen werden.

6. Verfahren nach Anspruch 1, wobei zuerst der erste Teil der Codierstationen (18a) vollständig beladen wird, bevor der zweite Teil der Codierstationen (18b) beladen wird.

7. Verfahren nach Anspruch 1, wobei die Dreheinrichtung (1) taktweise, in einer bestimmten Reihenfolge der Codierstationen (18a, 18b), in die zweite Transportrichtung (13a) derart gedreht wird,
- dass sie mit jedem n-ten Aufnahmefach (17a) zur Aufnahme erster Chipkarten (12) an einer Be- und Entladestation (14) anhält, und
- in eine der zweiten Transportrichtung (13a) entgegengesetzten Transportrichtung (13b) derart gedreht wird, dass sie mit jeden (n +1)-ten Aufnahmefach (17b) zu Aufnahme zweiter Chipkarten (12) an der Be- und Entladestation (14) anhält, und wobei
- bei einer ringförmigen Durchnummerierung der Aufnahmefächer (17a, 17b) n ungerade Zahlennummern darstellt.

8. Codiervorrichtung für Chipkarten (12) mit:
- einer Transporteinrichtung (11) zum Transport einer Mehrzahl an Chipkarten (12) in eine erste Transportrichtung (12a) einer Transportebene (12b), wobei
- eine Dreheinrichtung (1) um eine Drehachse (3) in eine zweite Transportrichtung (13a) und eine der zweiten Transportrichtung (13a) entgegengesetzte dritte Transportrichtung (13b) drehbar ist, wobei die Dreheinrichtung (1) sowohl in die zweite als auch in die dritte Transportrichtung (13a, 13b) drehbar ist,
**dadurch gekennzeichnet, dass** die Codiervorrichtung weiter aufweist:
- eine Dreheinrichtung (1) mit einer Mehrzahl an ringartig angeordneten und an der Dreheinrichtung (1) befestigten Codierstationen (18a, 18b), die jeweils ein Aufnahmefach (17a, 17b) zum Aufnehmen jeweils einer Chipkarte (12) aufweisen, wobei
-- die Drehachse (3) der Dreheinrichtung (1) senkrecht zu der Transportebene (12b) und der ersten Transportrichtung (12a) ausgerichtet ist, und
-- die Dreheinrichtung (1) dazu eingerichtet ist, das in Anspruch 1 definierte Verfahren auszuführen.

9. Codiervorrichtung nach Anspruch 8, wobei die Dreheinrichtung (1) eine stationär angeordnete Be- und Entladestation (14) zum Be- und Entladen der Chipkarten (12) von der Transporteinrichtung (11) in die Codierstationen (18a, 18b) und von den Codierstationen (18a, 18b) auf die Transporteinrichtung (11) und/oder eine weitere Transporteinrichtung aufweist.

10. Codiervorrichtung nach Anspruch 9, wobei die Be- und Entladestation (14) mindestens ein in Richtung der Drehachse (3) ein- und ausfahrbares Element zum Ein- und Ausfahren von jeweils einem Aufnahmefach (17a, 17b) aufweist.

11. Codiervorrichtung nach Anspruch 10, wobei das ein- und ausfahrbare Element mit mindestens einem an jedem Aufnahmefach (17a, 17b) angebrachten stangenartigen Führungselement (16a, 16b) wechselwirkt, wobei das stangenartige Führungselement (16a, 16b) mit dem ein- und ausfahrbaren Aufnahmefach (17a, 17b) verschiebbar ist.

12. Codiervorrichtung nach Anspruch 10 oder 11, wobei jedes Aufnahmefach (17a, 17b) und/oder jedes stangenartige Führungselement (16a, 16b) federbeaufschlagt ist, um das Aufnahmefach (17a, 17b) selbsttätig bei eingefahrenem ein- und ausfahrbaren Element einzufahren.

13. Codiervorrichtung nach einem der Ansprüche 8-12, wobei die Dreheinrichtung (1) in die zweite Transportrichtung (13a) derart drehbar ist, dass sie mit jedem n-ten Aufnahmefach (17a) zur Aufnahme erster Chipkarten (12) an der Be- und Entladestation (14) anhält, und in die dritte Transportrichtung (13b) derart drehbar ist, dass sie mit jeden (n + 1)-ten Aufnahmefach (17b) zur Aufnahme zweiter Chipkarten (12) an der Be- und Entladestation (14) anhält, wobei bei einer ringförmigen Durchnummerierung der Aufnahmefächer (17; 17a, 17b) n ungerade Zahlennummern enthält.

14. Codiervorrichtung nach einem der Ansprüche 8-12, wobei die Dreheinrichtung (1) verschwenkbar gelagert ist und zumindest einen Teleskopstab (21) aufweist.

## Claims

1. Method for encoding chip cards, wherein
- a plurality of chip cards (12) are transported with a transport device (11) in a first transport direction (12a) of a transport level (12b)
- a rotation device (1) is rotated, in a second transport direction (13a)and in a third transport direction (13b) contrary to the second transport direction (13a), wherein the rotation device (1) is rotated in both the second and the third transport direction (13a, 13b),
**characterised in that**
- the rotation device is rotated around a pivot (3) which is aligned perpendicular to the transport level (12b) and to the first transport direction (12a), wherein
- a plurality of encoding stations (18a, 18b) disposed circularly around the rotation device (1), each of which comprises a receptacle compartment (17a, 17b), are each loaded with a chip card (12), wherein
- a first part of the encoding stations (18a) is loaded intermittently, in a particular sequence of the encoding stations (18a, 18b),
- the rotation device (1) is rotated in the second transport direction (13a) between the individual loading operations of the first part of the encoding stations (18a),
- a second part of the encoding stations (18b) is loaded intermittently, in a particular sequence of the encoding stations (18a, 18b),
- the rotation device (1) is rotated in the third transport direction (13b) between the individual loading operations of the second part of the encoding stations (18b), and
- the chip cards (12) are encoded in the encoding stations (18a, 18b).

2. Method according to Claim 1, wherein the rotation device (1) is rotated alternately in the second and third transport direction (13a, 13b).

3. Method according to Claim 1, wherein the encoding stations (18a, 18b) are loaded by a stationarily disposed loading and unloading station (14).

4. Method according to Claim 1, wherein the chip cards (12) in the first part of the encoding stations (18a) are not unloaded until the second part of the encoding stations (18b) has been completely loaded, and the chip cards (12) in the second part of the encoding stations (18b) are not unloaded until the first part of the encoding stations (18a) has been unloaded and reloaded.

5. Method according to Claim 1, wherein the chip cards (12) are unloaded in the order in which they were loaded.

6. Method according to Claim 1, wherein the first part of the encoding stations (18a) is completely loaded first, before the second part of the encoding stations (18b) is loaded.

7. Method according to Claim 1, wherein the rotation device (1) rotates intermittently, in a particular sequence of the encoding stations (18a, 18b), in a second transport direction (13a), such that
- it stops at a loading and unloading station (14) with every n-th receptacle compartment (17a) in order to pick up first chip cards (12), and
- is rotated in a transport direction (13b) contrary to the second transport direction (13a) such that it stops at the loading and unloading station (14) with every (n+1)th receptacle compartment (17b) in order to pick up second chip cards (12), and wherein
- "n" represents uneven numbers if the receptacle compartments (17a, 17b) are numbered radially.

8. Encoding device for chip cards (12), comprising
- a transport device (11) for transporting a plurality of chip cards (12) in a first transport direction (12a) of a transport plane (12b), wherein
- a rotation device (1) can rotate around a pivot (3) in a second transport direction (13a) and in a third transport direction (13b) contrary to the second transport direction (13a), wherein said rotation device (1) can rotate in both the second and the third transport direction (13a, 13b)
**characterised in that** the encoding device further comprises:
- a rotation device (1) which comprises a plurality of circularly disposed encoding stations (18a, 18b), each of said stations comprising a receptacle compartment (17a, 17b) for holding a respective chip card (12), wherein
- the pivot (3) of the rotation device (1) is aligned perpendicular to the transport plane (12b) and to the first transport direction (12a), and
- the rotation device (1) is configured in order to execute the method defined in Claim 1.

9. Encoding device according to Claim 8, wherein the rotation device (1) comprises a stationarily disposed loading and unloading station (14) for loading and unloading chip cards (12) from the transport device (11) into the encoding stations (18a, 18b) and from the encoding stations (18a, 18b) to the transport device (11) and/or a further transport device.

10. Encoding device according to Claim 9, wherein the loading and unloading station (14) comprises at least one element that is extendable and retractable in the direction of the pivot (3) for extending and retracting each receptacle compartment (17a, 17b).

11. Encoding device according to Claim 10, wherein the extendable and retractable element interacts with at least one rod-type guide element (16a, 16b) attached to each receptacle compartment (17a, 17b), wherein said rod-type guide element (16a, 16b) is moveable with the extendable and retractable receptacle compartment (17a, 17b).

12. Encoding device according to Claim 10 or 11, wherein each receptacle compartment (17a, 17b) and/or each rod-type guide element (16a, 16b) is spring-loaded, so that the receptacle compartment (17) retracts automatically when the extendable and retractable element is retracted.

13. Encoding device according to one of claims 8-12, wherein the rotation device (1) may be rotated in the second transport direction (13a) such that it stops at the loading and unloading station (14) with every n-th receptacle compartment (17a) in order to pick up first chip cards (12), and may be rotated in the third transport direction (13b) such that it stops at the loading and unloading station (14) with every (n+1)-th receptacle compartment (17b) in order to pick up second chip cards (12), wherein "n" comprises uneven numbers if the receptacle compartments (17; 17a, 17b) are numbered radially.

14. Encoding device according to one of claims 8-12, wherein the rotation device (1) is pivotably mounted and has at least one telescopic rod (21).

## Revendications

1. Procédé de codage de cartes à puce, dans le cadre duquel
- une pluralité de cartes à puce (12) est transportée dans une première direction de transport (12a) d'un plan de transport (12b) à l'aide d'un dispositif de transport (11)
- un dispositif rotatif (1) tourne dans une deuxième direction de transport (13a) et dans une troisième direction de transport (13b) opposée à la deuxième direction de transport (13a), ledit dispositif rotatif tournant aussi bien dans la deuxième que dans la troisième direction de transport (13a, 13b),
**caractérisé en ce que**
- le dispositif rotatif tourne autour d'un axe de rotation (3) orienté perpendiculairement au plan de transport (12b) et à la première direction de transport (12a),
- une pluralité de stations de codage (18a, 18b) étant disposées en cercle sur le dispositif rotatif (1) et fixées sur celui-ci, chacune desdites stations présentant respectivement un casier de réception (17a, 17b) destiné à recevoir chacun une carte à puce (12),
-- une première partie des stations de codage (18a, 18b) étant chargée à une cadence de chargement et dans un ordre de succession des stations de codage (18a, 18b) donné,
-- le dispositif rotatif (1) tournant dans la deuxième direction de transport (13a) entre les différentes opérations de chargement de la première partie des stations de codage (18a),
-- une deuxième partie des stations de codage (18b) étant chargée à une cadence de chargement et dans un ordre de succession des stations de codage (18a, 18b) donné,
-- le dispositif rotatif (1) tournant dans la troisième direction de transport (13b) entre les différentes opérations de chargement de la deuxième partie des stations de codage (18b),
- les cartes à puce (12) sont codées dans les stations de codage (18a, 18b).

2. Procédé selon la revendication 1, dans le cadre duquel le dispositif rotatif (1) tourne en alternance dans la deuxième et dans la troisième direction de transport (13a, 13b).

3. Procédé selon la revendication 1, dans le cadre duquel les stations de codage (18a, 18b) sont chargées par une station de chargement et de déchargement (14) disposée de manière stationnaire.

4. Procédé selon la revendication 1, dans le cadre duquel les cartes à puce (12) situées dans la première partie des stations de codages(18a) sont déchargées seulement après que la deuxième partie des stations de codage (18b) a été entièrement chargée, et les cartes à puce (12) situées dans la deuxième partie des stations de codage (18b) sont déchargées seulement après que la première partie des stations de codage (18a) a été entièrement déchargée et rechargée à nouveau.

5. Procédé selon la revendication 1, dans le cadre duquel les cartes à puce (12) sont déchargées dans l'ordre de chargement.

6. Procédé selon la revendication 1, dans le cadre duquel la première partie des stations de codage (18a) est tout d'abord entièrement chargée avant que la deuxième partie des stations de codage (18b) soit chargée.

7. Procédé selon la revendication 1, dans le cadre duquel le dispositif rotatif (1) tourne de telle manière dans la deuxième direction de transport (13a) à une cadence et dans un ordre de succession des stations de codage (18a, 18b) donné
- qu'il s'arrête avec chaque énième casier de réception (17a) à une station de chargement et de déchargement (14) pour recevoir des premières cartes à puce (12), et
- tourne de telle manière dans une direction de transport (13b) opposée à la deuxième direction de transport (13a) qu'il s'arrête avec chaque énième (n+ 1) casier de réception (17a) à une station de chargement et de déchargement (14) pour recevoir des secondes cartes à puce (12),
- n représentant un numéro impair dans la numérotation circulaire continue des casiers de réception (17a, 17b).

8. Dispositif de codage de cartes à puce (12), comprenant
- un dispositif de transport (11) pour transporter une pluralité de cartes à puce (12) dans une première direction de transport (12a) d'un plan de transport (12b),
- un dispositif rotatif (1) pouvant tourner autour d'un axe de rotation (3) dans une deuxième direction de transport (13a) et dans une troisième direction de transport (13b) opposée à la deuxième direction de transport (13a), le dispositif rotatif (1) pouvant tourner aussi bien dans la deuxième que dans la troisième direction de transport (13a, 13b),
**caractérisé en ce que** le dispositif de codage comporte en outre :
- un dispositif rotatif (1) pourvu d'une pluralité de stations de codage (18a, 18b) disposées en cercle et fixées sur le dispositif rotatif (1), lesquelles stations présentent chacune un casier de réception (17a, 17b) destiné à recevoir chacun une carte à puce (12),
-- l'axe de rotation du dispositif rotatif (1) étant orienté perpendiculairement au plan de transport (12b) et à la première direction de transport (12a), et
-- le dispositif rotatif (1) étant conçu pour exécuter le procédé défini dans la revendication 1.

9. Dispositif de codage selon la revendication 8, dans le cadre duquel le dispositif rotatif (1) présente une station de chargement et de déchargement (14) disposée de manière stationnaire pour charger et décharger les cartes à puce (12) du dispositif de transport (11) dans les stations de codage (18a, 18b) et des stations de codage (18a, 18b) sur le dispositif de transport (11) et/ou un autre dispositif de transport.

10. Dispositif de codage selon la revendication 9, dans le cadre duquel la station de chargement et de déchargement (14) présente au moins un élément télescopique dans la direction de l'axe de rotation (3) pour rentrer et sortir à chaque fois un casier de réception (17a, 17b).

11. Dispositif de codage selon la revendication 10, dans le cadre duquel ledit élément télescopique interagit avec au moins un élément de guidage (16a, 16b) en forme de tige monté sur chaque casier de réception (17a, 17b), ledit élément de guidage en forme de tige (16a, 16b) déplaçable avec le casier de réception (17a, 17b) pouvant être rentré et sorti.

12. Dispositif de codage selon la revendication 10 ou 11, dans le cadre duquel chaque casier de réception (17a, 17b) et/ou chaque élément de guidage (16a, 16b) en forme de tige est soumis à l'action d'un ressort pour rentrer automatiquement le casier de réception (17a, 17b) lorsque l'élément télescopique est rentré.

13. Dispositif de codage selon l'une des revendications 8 à 12, dans le cadre duquel le dispositif rotatif (1) peut tourner de telle manière dans la deuxième direction de transport (13a) qu'il s'arrête avec chaque énième casier de réception (17a) à une station de chargement et de déchargement (14) pour recevoir des premières cartes à puce (12), et peut tourner de telle manière dans la troisième direction de transport (13b) qu'il s'arrête avec chaque énième (n + 1) casier de réception (17a) à une station de chargement et de déchargement (14) pour recevoir des secondes cartes à puce (12), la numérotation circulaire continue des casiers de réception (17 ; 17a, 17b) comportant n numéros impairs.

14. Dispositif de codage (1) selon l'une des revendications 8 à 12, dans le cadre duquel le dispositif rotatif est monté pivotant et présente au moins une barre télescopique (21).
